# EUROPÄISCHE PATENTSCHRIFT

(11) **EP 2 586 606 B1**
(45) Veröffentlichungstag und Bekanntmachung des Hinweises auf die Patenterteilung: **18.03.2015**
(21) Anmeldenummer: 12405109.5
(22) Anmeldetag: 01.10.2012
(51) Int. Cl.: B32B 1/02, B32B 27/10, B32B 27/32, B32B 29/00, B65D 65/40, D21H 27/36

(54) **Verpackungsmaterial**
Packaging material
Matériau d'emballage

(30) Priorität: 25.10.2011 CH 17232011
(43) Veröffentlichungstag der Anmeldung: 01.05.2013
(73) Patentinhaber: Gubler, Christian, 8142 Uitikon-Waldegg (CH)
(72) Erfinder: Gubler, Christian, 8142 Uitikon (CH)
(74) Vertreter: Frei Patent Attorneys

(56) Entgegenhaltungen:
- WO-A1-01/39968
- DE-U1-202011 100 263
- JP-A- 2009 035 312
- US-A1- 2002 110 675
- US-B1- 7 033 455

## Beschreibung

Die Erfindung bezieht sich auf das Gebiet der Verpackungsmaterialien und betrifft ein mehrschichtiges Verpackungsmaterial mit wenigstens einer Schicht aus Kunststoff. Ferner betrifft die Erfindung ein Verfahren zur Herstellung des Verpackungsmaterials, die Verwendung des Verpackungsmaterials sowie einen aus dem Verpackungsmaterial hergestellten Verpackungsbehälter.

### STAND DER TECHNIK

Es ist bekannt, flächenförmige Verpackungsmaterialien aus Kunststoff in einem Tiefziehverfahren unter Anwendung von Wärme zu schalenförmigen Verpackungsbehältern zu verformen. Man spricht bei dieser Art Verfahren auch von Thermoformen. Die Vertiefungen der Verpackungsbehälter werden mit Lebensmitteln befüllt, begast und mittels einer Deckfolie verschlossen. Hierzu weist die Schale einen umlaufenden Siegelrand auf, entlang welchem die Verschlussfolie auf die Schale aufgesiegelt wird.

Das hierzu gemäss Stand der Technik verwendete Verpackungsmaterial besteht vollständig aus Kunststoff. Eine solche Verpackung entspricht daher nicht den heutigen Anforderungen an die Umweltverträglichkeit. So stellt der Kunststoff ein nicht erneuerbarer Rohstoff dar, welcher entsprechend auch eine negative CO₂-Bilanz aufweist. Ferner ist das Erscheinungsbild von Kunststoff als Verpackungsmaterial für Lebensmittel unnatürlich. Soll überdies mit der Verpackung die Exklusivität oder die besondere Qualität eines Lebensmittels unterstrichen werden, so eignen sich Kunststoffverpackungen aus ästhetischen Gründen hierzu nicht besonders gut. Im Weiteren sind Lebensmittel aus biologischer und/oder nachhaltiger Produktion nur schlecht mit einer reinen Kunststoffverpackung vereinbar. Der Konsument wünscht gerade bei solchen Produkten, dass das entsprechende Verpackungsmaterial aus erneuerbaren Rohstoffen hergestellt wird. Ferner sollen die Rohstoffe auch aus einer nachhaltigen Produktion stammen.

### DARSTELLUNG DER ERFINDUNG

Es ist deshalb Aufgabe der Erfindung, ein tiefziehfähiges Verpackungsmaterial vorzuschlagen, welches die oben genannten Nachteile behebt. Die Aufgabe wird mit den Merkmalen der unabhängigen Patentansprüche 1 und 11 gelöst.

Weitere bevorzugte Ausführungsformen und Weiterbildungen der Erfindung gehen aus den abhängigen Patentansprüchen hervor.

Das erfindungsgemässe mehrschichtige, tiefziehfähige Verpackungsmaterial besteht aus einen Schichtverbund, welcher wenigstens zwei Schichten aus Papier oder Karton und eine dazwischen liegende Schicht aus Kunststoff, nachfolgend Zwischenschicht genannt, enthält. Die Zwischenschicht aus Kunststoff ist ein thermoplastischer Kunststoff, vorzugsweise ein Polyolefin und insbesondere ein Polyethylen (PE) oder Polypropylen (PP). Die Zwischenschicht wird vorzugsweise zwischen die Papier- bzw. Kartonschichten extrusionskaschiert.

Beim Extrusionskaschieren wird ein fliessfähiger, insbesondere thermoplastischer Kunststoff, z. B. über eine Flachdüse, auf die zu kaschierende Oberfläche einer Schichtformation, z. B. ein Schichtverbund, extrudiert.

Im vorliegenden Fall wird der Kunststoff zwischen die Papier- bzw. Kartonschichten extrudiert. Die Extrusionskaschierung wird z. B. mittels eines Extrusionskalanders ausgeführt. Der Schichtverbund wird im Anschluss bzw. während der Extrusionskaschierung vorzugsweise noch mit Druck beaufschlagt damit sich die Papier- bzw. Kartonschichten optimal mit der Kunststoffzwischenschicht verbinden. Die Druckbeaufschlagung kann z. B. ein gegeneinander Pressen der Schichten umfassen. Dies kann z. B. über Pressrollen bzw. Kalanderrollen geschehen. Während dieses Vorgangs dringt bevorzugt flüssiges Kunststoffmaterial der Zwischenschicht in die Faserstruktur der Papier- bzw. Kartonschichten ein, so dass diese wenigstens teilweise mit Kunststoffmaterial der Zwischenschicht durchsetzt sind. Das Kunststoffmaterial des Schichtverbundes verfestigt sich im Anschluss an die Extrusionskaschierung.

Die Schichten aus Papier oder Karton weisen bevorzugt ein Flächengewicht von 50 g/m² oder grösser, vorteilhaft von 80 g/m² oder grösser und insbesondere von 90 g/m² oder grösser auf. Ferner weisen die besagten Schichten bevorzugt ein Flächengewicht von 250 g/m² oder kleiner, vorteilhaft von 200 g/m² oder kleiner und insbesondere von 160 g/m² oder kleiner auf. Typische Flächengewichte sind beispielsweise 100 g/m² und 150 g/m². Die beiden Schichten aus Papier oder Karton können dasselbe oder unterschiedliche Flächengewichte aufweisen.

Die Papier- bzw. Kartonschicht zeichnet sich bevorzugt durch einen hohen Gehalt an Langfasern aus. Die Fasern sind bevorzugt Zellulosefasern, insbesondere von Nadelhölzern. Gemäss einer bevorzugten Ausführung enthält die Papier- bzw. Kartonschicht einen Anteil an Primärfasern von über 90%, insbesondere von 100%. Die Fasern sind bevorzugt wenigstens teilweise gerichtet.

Die Papier- bzw. Kartonschicht zeichnet sich ferner bevorzugt auch durch seine hohe Elastizität aus. Diese beträgt beispielsweise mehr als 5%, insbesondere mehr als 10%. Die Elastizität beträgt beispielsweise 5 bis 20%. Die hohe Elastizität wird unter anderem durch die eingesetzten Bindemittel bzw. Klebstoffe erreicht, welche auch nach ihrer Aushärtung bzw. Verfestigung die Elastizität der Papier- bzw. Kartonschicht bzw. deren Faserstruktur im oben genannten Umfang gewährleisten. Ein herkömmliches Papier weist dahingegen lediglich eine Elastizität von 2 bis 4% auf. Die Prozentzahlen beziehen sich auf die Längenänderung in Zugrichtung ausgehend von der ursprünglichen Länge in entspanntem Zustand, welche 100% entspricht.

Die Papier- bzw. Kartonschichten können gefärbt sein. Hierzu wird die Papiermasse vor der Produktion des Papiers bzw. Kartons mit Farbpigmenten eingefärbt. Die Papier- bzw. Kartonschicht können auch bedruckt sein. Dies geschieht vorzugsweise vor dem Tiefziehvorgang. Dadurch kann der Verpackung eine besondere Erscheinung gegeben werden. Die Papier- bzw. Kartonschicht kann sowohl auf ihrer Aussenseite als auch auf ihrer, zum Verpackungsinhalt weisenden Innenseite bedruckt sein. Die Bedruckung der Innenseite geschieht zweckmässig in Form eines Zwischenlagendruckes. Die Bedruckung kann mittels Flexo- oder Tiefdruck erfolgen.

Die Zwischenschicht aus Kunststoff weist bevorzugt eine Dicke von 10µ (Mikrometer) oder grösser, insbesondere von 15µ oder grösser auf. Ferner ist die Dicke der Zwischenschicht vorzugsweise 30 µ oder kleiner insbesondere 25µ oder kleiner. Eine typische Schichtdicke ist z. B. 20µ, was einem Flächengewicht von rund 18 g/m² entspricht.

Auf den oben genannten Schichtverbund können auf einer oder beiden seiner freien Seiten jeweils eine oder mehrere weitere Schichten oder Schichtverbunde, insbesondere aus Kunststoff, aufgebracht sein. Diese Schichten können z. B. eine Siegelschicht für eine Deckfolie ausbilden. Unter dem Begriff "Folie" ist in vorliegender Beschreibung ein dünnes, flexibles und flächenförmiges, als Endprodukt oder Halbfabrikat vorliegendes Verpackungsmaterial zu verstehen. Der Begriff "Folie" ist insbesondere nicht an ein bestimmtes Verpackungsmaterial oder an eine bestimmte Materialkombination gebunden. Eine Folie kann ein- oder mehrschichtig aufgebaut sein.

In einer bevorzugten Weiterbildung der Erfindung enthält das erfindungsgemässe Verpackungsmaterial eine weitere Schichtformation, insbesondere einen weiteren Schichtverbund. Die Schichtformation enthält wenigstens eine bevorzugt jedoch mehrere Schichten. Die Schichtformation kann also auch einschichtig sein. Die wenigstens eine, bevorzugt sämtliche Schichten sind bevorzugt aus Kunststoff. Diese weitere Schichtformation, nachfolgend zweite Schichtformation bzw. zweiter Schichtverbund genannt, ist mit dem oben genannten, Schichten aus Papier bzw. Karton enthaltende Schichtverbund, nachfolgend erster Schichtverbund genannt, kaschiert. D.h., die zweite Schichtformation ist insbesondere auf eine der aussen liegenden Schichten aus Papier bzw. Karton kaschiert.

Die zweite Schichtformation kann gemäss einer ersten Ausführungsvariante über eine Klebstoffschicht (Kaschierkleber) mit dem ersten Schichtverbund kaschiert sein. Bevorzugt wird die freie Fläche einer Papier- bzw. Kartonschicht des ersten Schichtverbundes mit der freien Fläche einer Kunststoffschicht, insbesondere einer Polyolefin- bzw. PE-Schicht des zweiten Schichtverbundes mittels eines Kaschierklebers kaschiert.

Die zweite Schichtformation bzw. der zweite Schichtverbund kann gemäss einer zweiten Ausführungsvariante auf den ersten Schichtverbund extrusionskaschiert sein. Das heisst, die zweite Schichtformation wird in einem Extrusionsverfahren direkt, d.h. in-line auf den ersten Schichtverbund aufgebracht und mit diesem verbunden. Ist die zweite Schichtformation mehrschichtig, so geschieht dies bevorzugt in einem Coextrusionsverfahren, in welchem sämtliche Schichten des zweiten Schichtverbundes in-line extrudiert und auf den ersten Schichtverbund aufgebracht werden.

Diejenige Schicht der zweiten Schichtformation bzw. des zweiten Schichtverbundes, welche mit der Schicht aus Papier oder Karton in Verbund gebracht wird, ist bevorzugt ein thermoplastischer Kunststoff, vorzugsweise ein Polyolefin und insbesondere ein Polyethylen (PE) oder Polypropylen (PP). Während des Kaschiervorganges dringt bevorzugt flüssiges Kunststoffmaterial dieser Schicht in die Faserstruktur der Papier- bzw. Kartonschichten ein, so dass diese wenigstens teilweise mit Kunststoffmaterial der besagten Schicht durchsetzt sind.

Die zweite Schichtformation bzw. der zweite Schichtverbund kann mit dem ersten Schichtverbund gemäss einer dritten Ausführungsvariante über eine in einem Extrusionsverfahren direkt, d.h. in-line zwischen den ersten Schichtverbund und die zweite Schichtformation extrusionskaschierten Schicht aus Kunststoff verbunden sein. Hierzu wird ein fliessfähiger Kunststoff zwischen den ersten Schichtverbund und die zweite Schichtformation extrudiert. Diese Schicht aus Kunststoff ist bevorzugt ein thermoplastischer Kunststoff, vorzugsweise ein Polyolefin und insbesondere ein Polyethylen (PE) oder Polypropylen (PP). Während des Kaschiervorganges dringt bevorzugt flüssiges Kunststoffmaterial dieser Schicht in die Faserstruktur der Papier- bzw. Kartonschichten ein, so dass diese wenigstens teilweise mit Kunststoffmaterial der besagten Schicht durchsetzt sind.

Die zweite Schichtformation bzw. der zweite Schichtverbund enthält bevorzugt eine Barriereschicht, welche das Verpackungsmaterial undurchlässig für Gase, wie z. B. O₂, CO₂, N₂, sowie gegebenenfalls auch für Aromastoffe macht. Eine Wasserdampfbarriere wird insbesondere durch den Einsatz von Kunststoffschichten aus Polyethylen erreicht.

Die Barriereschichten verlängern die Haltbarkeit der Füllgüter, vor allem frischer Lebensmittel, so dass diese auch länger in der logistischen Kette bleiben können. Zudem werden die Konsistenz und der Geschmack der Füllgüter, wie Käse, Fleischwaren oder Fischprodukte, über die verlängerte Haltbarkeit aufrecht erhalten.

Gemäss einer bevorzugten Weiterbildung der Erfindung weist der zweite Schichtverbund wenigstens zwei Schichten aus Kunststoff sowie eine dritte, dazwischen liegende Barriereschicht auf oder besteht daraus. Die beiden Schichten aus Kunststoff werden mit der Barriereschicht bevorzugt coextrudiert. Zwischen der Barriereschicht und den aussen liegenden Kunststoffschichten kann jeweils ein Haftvermittler vorgesehen sein.

Die beiden Schichten aus Kunststoff bestehen bevorzugt aus einem thermoplastischen Kunststoff, insbesondere aus einem Polyolefin. Die Schichten aus Kunststoff bestehen besonders bevorzugt aus einem Polyethylen (PE), wie Polyethylen geringer Dichte (LDPE), oder einem Polypropylen (PP). Im Weiteren können die Schichten aus Kunststoff auch aus einem Ionomer, wie z. B. aus dem von DuPont™ vertriebenen Kunststoff Surlyn® bestehen. Es versteht sich, dass die Kunststoffschichten des genannten Schichtverbundes auch aus einer Kombination unterschiedlicher Kunststoffe, insbesondere aus einer Kombination der oben genannten Kunststoffe bestehen kann.

Die zum Verpackungsraum weisende Schicht aus Kunststoff ist bevorzugt als Peel-Schicht ausgebildet. D.h. eine auf diese aufgesiegelte Deckfolie ist von dieser abschälbar. Auf diese Weise kann die Verpackung durch den Konsumenten ohne Einsatz eines Öffnungswerkzeuges leicht geöffnet werden. Die Schälbarkeit der Peel-Schicht, welche z. B. aus PE besteht, wird z. B. durch ein spezifisches Extrusionsverfahren und/oder durch Zugabe von Additiven bzw. Zusatzstoffen, wie Polybutylen (PB, Polybuten-1) in das Ausgangsmaterial erreicht.

Wird der vorgenannte zweite Schichtverbund gemäss der dritten Ausfiihrungsvariante mit dem ersten Schichtverbund kaschiert, so besteht die extrusionskaschierte Schicht vorzugsweise aus demselben Kunststoff wie die dieser anliegenden Schicht des zweiten Schichtverbundes.

Gemäss einer alternativen Ausführungsform dieser dritten Ausführungsvariante umfasst der zweite Schichtverbund eine erste Schicht aus Kunststoff sowie eine zweite Barriereschicht. Gemäss der dritten Ausführungsvariante wird nun eine Schicht aus Kunststoff der bereits erwähnten Beschaffenheit zwischen den ersten und zweiten Schichtverbund extrudiert, wobei diese extrusionskaschierte Schicht zwischen der Barriereschicht und der Papier- bzw. Kartonschicht angeordnet ist. Die Barriereschicht ist nach Abschluss der Extrusionskaschierung entsprechend zwischen der ersten Schicht aus Kunststoff und der besagten extrusionskaschierten Schicht aus Kunststoff angeordnet.

Die extrusionskaschierte Schicht sowie die erste Kunststoffschicht bestehen bevorzugt ebenfalls aus einem thermoplastischen Kunststoff, insbesondere aus einem Polyolefin. Die Schichten bestehen besonders bevorzugt aus einem Polyethylen (PE), wie Polyethylen geringer Dichte (LDPE), oder einem Polypropylen (PP). Im Weiteren können die Schichten aus Kunststoff auch aus einem Ionomer, wie z. B. aus dem von DuPont™ vertriebenen Kunststoff Surlyn® bestehen. Es versteht sich, dass die Kunststoffschichten des genannten Schichtverbundes auch aus einer Kombination unterschiedlicher Kunststoffe, insbesondere aus einer Kombination der oben genannten Kunststoffe bestehen kann.

Die Barriereschicht besteht bevorzugt aus Ethylen-Vinylalkohol-Copolymer (EVOH). EVOH zeichnet sich durch die Eigenschaft aus, dass dessen Barriereeigenschaften bei einem Tiefziehvorgang wenig beeinträchtigt werden.

Die Barriereschicht kann jedoch auch aus einem anderen Material bestehen und z. B. aus einer keramischen Beschichtung, wie SiOₓ, einer Kunststofffolie beschaffen sein. Ferner kann die Barriereschicht auch eine Metallfolie oder eine metallische Beschichtung einer Kunststofffolie sein. Im Weiteren kann die Barriereschicht auch aus einem Polyvinylidenchlorid (PVdC) sein. PVdC kann z. B. als Folie mittels Kaschieren in den Schichtverbund integriert werden. Keramische oder metallische Beschichtungen weisen jedoch den Nachteil auf, dass deren Barriereeigenschaften bei einem Tiefziehvorgang im Vergleich zu EVOH erheblich beeinträchtigt werden. Metallfolien neigen beim Tiefziehen ferner zu Falten.

Die Barriereschicht, insbesondere eine Barriereschicht aus EVOH, ist bevorzugt zwischen zwei PE-Schichten eingebettet. Dadurch ist die Barriereschicht vor Feuchtigkeit abgeschirmt und die Barriereeigenschaften bleiben auf diese Weise erhalten.

Der erste Schichtverbund weist bevorzugt ein Flächengewicht von 150 g/m² oder grösser, insbesondere von 200 g/m² oder grösser und von 400 g/m² oder kleiner, insbesondere von 300 g/m² oder kleiner auf.

Die zweite Schichtformation bzw. der zweite Schichtverbund weist bevorzugt eine Gesamtdicke von 20µ oder grösser, insbesondere 30µ oder grösser und vorteilhaft von 35µ oder grösser sowie von 60µ oder kleiner, insbesondere von 50µ oder kleiner und vorteilhaft von 45µ oder kleiner auf.

Das erfindungsgemässe Verpackungsmaterial weist bevorzugt ein Flächengewicht von insgesamt 200 g/m² oder grösser, insbesondere von 250 g/m² oder grösser und von 500 g/m² oder kleiner, insbesondere von 400 g/m² oder kleiner auf.

Die Erfindung betrifft ferner auch ein Verfahren zur Herstellung eines erfindungsgemässen Verpackungsmaterials. Das Verfahren zeichnet sich durch folgende Schritte aus:
- Herstellen eines Mehrschichtverbundes durch:
   - Zuführen zweier Bahnen aus Papier oder Karton
   - Zuführen einer Schicht aus flüssigem Kunststoff, insbesondere Polyethylen (PE), zwischen die beiden Bahnen aus Papier oder Karton mittels eines Extrusionsverfahrens;
   - Kaschieren der extrudierten Schicht aus Kunststoff mit den beiden Bahnen aus Papier oder Karton.

Das Papier bzw. der Karton liegt bevorzugt als Rollenware, d.h. in Form von so genannten Mutterrollen, vor. Die Herstellung des betreffenden Mehrschichtverbundes geschieht bevorzugt durch kontinuierliches Zusammenführen zweier Papier- bzw. Kartonbahnen, wobei zwischen die beiden Bahnen der fliessfähige Kunststoff extrudiert wird. Der Schichtverbund kann während oder nach der Extrusionskaschierung und vor der vollständigen Verfestigung der Kaschierschicht noch einer Druckbeaufschlagung, insbesondere einer Pressung, unterzogen werden, so dass sich die beiden Schichten aus Papier bzw. Karton optimal mit der Kaschierschicht verbinden.

In einer ersten Weiterbildung der Erfindung umfasst das Verfahren die weiteren Verfahrensschritte:
- Bereitstellen einer zweiten Schichtformation, insbesondere eines zweiten Mehrschichtverbundes, enthaltend wenigstens eine Schicht, insbesondere aus Kunststoff;
- Kaschieren des zweiten Mehrschichtverbundes mit dem ersten Mehrschichtverbund, insbesondere mittels eines Kaschierklebers oder einer weiteren zwischen dem ersten und zweiten Schichtverbund extrusionskaschierten Schicht aus Kunststoff.

In einer zweiten Weiterbildung der Erfindung umfasst das Verfahren den weiteren Verfahrensschritt:
- Extrusionskaschieren einer zweiten Schichtformation, insbesondere eines zweiten Mehrschichtverbundes, enthaltend wenigstens eine Schicht aus Kunststoff auf den ersten Schichtverbund.

Der erste Schichtverbund bildet folglich ein Halbfabrikat aus, welches als Folie vorliegt, z. B. in Form von Rollenware, auch Mutterrolle genannt. Die zweite Schichtformation bzw. der zweite Schichtverbund kann ebenfalls als Halbfabrikat vorliegen, welches als Folie vorliegt, z. B. in Form von Rollenware, auch Mutterrolle genannt.

Entsprechend kann das erfindungsgemässe Verpackungsmaterial über einen Kaschiervorgang aus einem ersten und zweiten vorproduzierten Schichtverbund hergestellt werden. Dieser Verfahrensschritt ist bevorzugt kontinuierlich indem eine erste Bahn, welche den ersten Schichtverbund darstellt, mit einer zweiten Bahn, welche den zweiten Schichtverbund darstellt, zusammengeführt wird.

Das erfindungsgemässe Verpackungsmaterial findet Verwendung zur Herstellung von tiefgezogenen Verpackungsbehältern. Die Verpackungsbehälter werden bevorzugt mittels Thermoformen hergestellt. Das Thermoformen ist eine besondere Ausprägung eines Tiefziehverfahrens. Das Thermoformen zeichnet sich insbesondere durch das vorgängige Erwärmen bzw. Erhitzen des tiefzuziehenden Materials aus, welches dadurch besser oder erst tiefziehfähig wird. Beim erfindungsgemässen Verfahren wird insbesondere die zwischen den Papier- bzw. Kartonschichten angeordnete thermoplastische Kunststoffschicht auf eine Umformtemperatur erwärmt. Das Tiefziehen geschieht bevorzugt mittels Druckbeaufschlagung auf das Verpackungsmaterial.

Gemäss einer bevorzugten Weiterbildung des Herstellungsverfahrens liegt das erfindungsgemässe Verpackungsmaterial als Rollenware, d.h. in Form von Endrollen vor und wird in Form einer Materialbahn kontinuierlich einer Tiefziehvorrichtung zugeführt. In einer Aufwärmeinrichtung wird die Materialbahn ein oder beidseitig erhitzt. Das Material kann z. B. auf eine Temperatur von 80° bis 90° (Celsius) erhitzt werden. In einer, in Prozessrichtung nachgelagerten Tiefzieheinrichtung werden Vertiefungen, insbesondere schalenförmige Vertiefungen, in die vorgewärmte Materialbahn geformt. Die aus der Tiefzieheinrichtung austretende Materialbahn weist nun eine Mehrzahl von über die Materialbahn verteilten Vertiefungen auf. In einem nachfolgenden Schritt werden in einer Separiereinrichtung, welche z. B. eine Ausstanzeinrichtung sein kann, einzelne Verpackungsbehälter mit jeweils einer Vertiefung sowie einem umlaufenden, schulterförmigen Siegelrand von der Materialbahn separiert, insbesondere aus dieser ausgestanzt.

Die Papier- bzw. Kartonschichten weisen eine hohe mechanische Widerstandsfähigkeit auf. Der erste Schichtverbund mit den Papier- bzw. Kartonschichten sorgt daher für die notwendige mechanische Festigkeit und Formstabilität des Verpackungsbehälters, also letztlich für den Schutz der Lebensmittel vor Druck und Verformung. Hinzu kommt, dass der Verpackungsinhalt nicht zusammengepresst wird. Dies ist insbesondere bei Lebensmitteln wichtig, welche in einzelnen Teilen, z. B. als Tranchen in den Verpackungsbehälter abgefüllt werden. Die einzelnen Lebensmittelteile bleiben dadurch nämlich gut trennbar und auch einzeln verzehrbar.

Die zwischen den Papier- bzw. Kartonschichten angeordnete thermoplastische Kunststoffschicht trägt nach ihrer Wiederverfestigung im Anschluss an den Tiefziehvorgang zur Formerhaltung der tiefgezogenen Vertiefungen im Verpackungsmaterial bei. Da beim Extrusionskaschieren der Zwischenschicht bevorzugt auch Material der Kunststoffschicht in die Faserstruktur der Papier- bzw. Kartonschichten eindringt, wird die Tiefziehfähigkeit und Formhaltigkeit der Verpackungsbehälter noch zusätzlich gesteigert.

Die tiefgezogenen Verpackungsbehälter sind bevorzugt schalenförmige Behältnisse mit einem um eine Aufnahmevertiefung umlaufende, schulterförmige Siegelfläche, auf welcher eine flexible Deckfolie zum Versiegeln der Aufnahmevertiefung anbringbar ist.

In einer bevorzugten Weiterbildung der Erfindung werden die geformten Vertiefungen "inline" mit dem Verpackungsinhalt, insbesondere mit Lebensmittel, befüllt und mit einer Deckfolie versiegelt. D.h., das Erhitzen der Materialbahn, das Tiefziehen, Befüllen und Verschliessen der Verpackungen geschieht in einem kontinuierlichen Prozessdurchgang. Das Separieren der Verpackungsbehälter aus der Materialbahn im Anschluss an den Tiefziehschritt kann vor oder nach dem Befüllen bzw. Verschliessen der Verpackungsbehälter geschehen. Die Verpackungsbehälter können mit der bzw. im Anschluss an die Befüllung mit einem Schutzgas begast werden.

Die Verpackungsbehälter werden beispielsweise zum Verpacken scheiben- bzw. tranchenförmig aufbereiteten Lebensmitteln, insbesondere Fleischwaren, Fisch oder Käse, verwendet.

Das erfindungsgemässe Verpackungsmaterial weist den Vorteil auf, dass der Kunststoffanteil am Verpackungsmaterial erheblich reduziert ist, indem Kunststoffschichten im Verpackungsbehälter durch Papier- bzw. Kartonschichten ersetzt werden. So besteht beispielsweise bis zu 85 % der Gesamtfoliendicke aus Papier bzw. Karton und somit aus erneuerbaren Rohstoffen. Trotz der neuartigen Zusammensetzung des Verpackungsmaterials kann dieses mit Ausnahme von wenigen Modifikationen in herkömmlichen Verpackungsmaschinen verarbeitet werden, in welchen bislang vollständig aus Kunststoff bestehende Verpackungsbehälter tiefgezogen wurden. Sogar die Maschineneinstellungen können im Wesentlichen übernommen werden. Die Barriereeigenschaften des Verpackungsmaterials zugunsten der Haltbarkeit der Produkte sind identisch mit Verpackungsmaterialien aus Kunststoff, wie sie heute für dieselben Anwendungen eingesetzt werden.

### KURZE BESCHREIBUNG DER ZEICHNUNGEN

Im Folgenden wird der Erfindungsgegenstand anhand eines bevorzugten Ausführungsbeispiels, welches in den beiliegenden Zeichnungen dargestellt ist, näher erläutert. Es zeigen jeweils schematisch:
- Figur 1: eine Schnittdarstellung durch ein erfindungsgemässes Verpackungsmaterial;
- Figur 2a: einen Schnittdarstellung durch den ersten Mehrschichtverbund eines Verpackungsmaterials gemäss Figur 1;
- Figur 2b: einen Schnittdarstellung durch den zweiten Mehrschichtverbund eines Verpackungsmaterials gemäss Figur 1;
- Figur 3: ein tiefgezogener Verpackungsbehälter aus einem Verpackungsmaterial gemäss Figur 1.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die in den Figuren dargestellten Schichtdicken sind rein schematisch und widerspiegeln insbesondere auch nicht die die relativen Schichtdickenverhältnisse.

### WEGE ZUR AUSFÜHRUNG DER ERFINDUNG

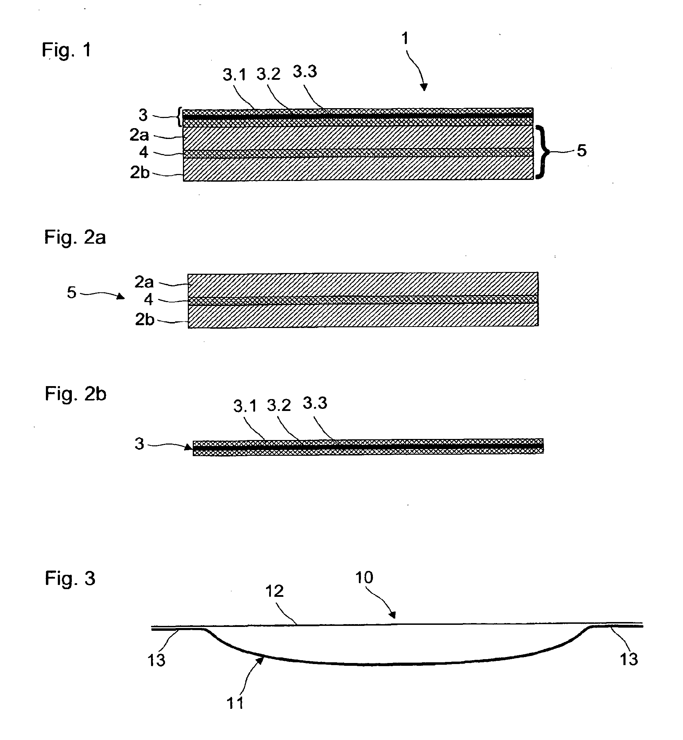

Das Verpackungsmaterial 1 gemäss Figur 1 besteht aus einem ersten und zweiten Schichtverbund 3, 5, welche als Halbfabrikate hergestellt und über eine Klebschicht (nicht gezeigt) zum erfindungsgemässen Verpackungsmaterial 1 kaschiert wurden.

Der erste Schichtverbund 5 besteht aus einer ersten und zweiten Kartonschicht 2a, 2b, mit z. B. jeweils einem Flächengewicht von 100 bis 150 g/m², welche über eine dazwischen liegende Kunststoffschicht 4 aus PE, mit z. B. einem Flächengewicht von 10 bis 30 g/m², extrusionskaschiert sind. Typische Schichtaufbauten sind (Papier bzw. Kartonschicht / Zwischenschicht / Papier bzw. Kartonschicht):
150 / 18 / 150 ( g/m²)
100 / 18 / 150 (g/m²)
100 / 18 / 100 (g/m²)

Das Papier bzw. der Karton 2a, 2b liegt beispielsweise als Rollenware vor während die Kunststoffschicht 4 in Form einer fliessfähigen Masse zwischen die Kartonbahnen 2a, 2b extrudiert wird.

Der zweite Schichtverbund 3 besteht aus einer ersten und einer zweiten Kunststoffschicht 3.1, 3.3 aus PE oder PP sowie einer dazwischen liegenden Barriereschicht 3.2., insbesondere aus EVOH. Der zweite Schichtverbund 3 weist z. B. eine Gesamtdicke von rund 40µ auf. Dies entspricht einem Flächegewicht von rund 36 g/m².

Der erste und zweite Schichtverbund 3, 5 werden wie bereits erwähnt mittels eines Klebstoffs zur erfindungsgemässen Verpackungsmaterial kaschiert. Die aussen liegende Kunststoffschicht 3.1 des zweiten Schichtverbundes 3 ist als Peelschicht ausgebildet.

Aus dem Verpackungsmaterial 1 gemäss Figur 1 lassen sich nun in einem Tiefziehverfahren Verpackungsbehälter 11 mit einem umlaufenden, schulterförmigen Siegelrand 13 erstellen (siehe Figur 3). Die Verpackungsbehälter 11 sind mittels Deckfolien 12, welche auf den Siegelrand 13 gesiegelt werden zu Verpackungen 10 verschliessbar.

## Patentansprüche

1. Mehrschichtiges, tiefziehfähiges Verpackungsmaterial (1),
**dadurch gekennzeichnet, dass**
das Verpackungsmaterial (1) einen Schichtverbund (5) umfasst, enthaltend zwei Schichten (2a, 2b) Papier oder Karton und eine dazwischen liegende Schicht (4) aus Kunststoff, insbesondere aus Polyethylen (PE) oder Polypropylen (PP).

2. Verpackungsmaterial gemäss Anspruch 1, **dadurch gekennzeichnet, dass** die Schichten (2a, 2b) aus Papier oder Karton ein Flächengewicht von 50 bis 250 g/m², insbesondere von 80 bis 200 g/m², aufweisen.

3. Verpackungsmaterial gemäss Anspruch 1 oder 2, **dadurch gekennzeichnet, dass** die zwischen den beiden Schichten (2a, 2b) aus Papier oder Karton liegende Zwischenschicht (4) aus Kunststoff eine Dicke von 10 bis 30µ aufweist.

4. Verpackungsmaterial gemäss einem der Ansprüche 1 bis 3, **dadurch gekennzeichnet, dass** das Verpackungsmaterial (1) eine weitere Schichtformation (3), insbesondere einen weiteren Schichtverbund, enthaltend wenigstens eine Schicht, insbesondere aus Kunststoff, enthält, welche mit dem die Schichten (2a, 2b) aus Papier oder Karton enthaltenden Schichtverbund (5) kaschiert ist.

5. Verpackungsmaterial gemäss einem der Ansprüche 1 bis 4, **dadurch gekennzeichnet, dass** der weitere Schichtverbund (3) wenigstens eine erste Schicht (3.1) aus Kunststoff, insbesondere aus Polyethylen (PE), und eine Gasbarriereschicht (3.2), insbesondere aus Ethylen-Vinylalkohol-Copolymer (EVOH), umfasst oder daraus besteht.

6. Verpackungsmaterial gemäss Anspruch 5, **dadurch gekennzeichnet, dass** der weitere Schichtverbund (3) wenigstens eine erste und zweite Schicht (3.1, 3.3) aus Kunststoff, insbesondere aus Polyethylen (PE), und eine dritte, dazwischen liegende Gasbarriereschicht (3.2), insbesondere aus Ethylen-Vinylalkohol-Copolymer (EVOH), umfasst oder daraus besteht.

7. Verpackungsmaterial gemäss einem der Ansprüche 4 bis 6, **dadurch gekennzeichnet, dass** die aussen liegende, erste Schicht (3.1) des weiteren Schichtverbundes (3) als Peel-Schicht ausgebildet ist.

8. Verpackungsmaterial gemäss einem der Ansprüche 4 bis 7, **dadurch gekennzeichnet, dass** die weitere Schichtformation (3), insbesondere der weitere Schichtverbund (3) eine Gesamtdicke von 20µ bis 60µ aufweist.

9. Verpackungsmaterial gemäss einem der Ansprüche 1 bis 8, **dadurch gekennzeichnet, dass** der die Schichten aus Papier oder Karton (2a, 2b) enthaltende Schichtverbund (5) ein Flächengewicht von 150 bis 400 g/m², insbesondere von 200 bis 300 g/m² aufweist.

10. Verpackungsmaterial gemäss einem der Ansprüche 1 bis 9, **dadurch gekennzeichnet, dass** das Verpackungsmaterial (1) ein Gesamtflächengewicht von 200 bis 500 g/m², insbesondere von 200 bis 400 g/m² aufweist.

11. Verpackungsmaterial gemäss einem der Ansprüche 1 bis 10, **dadurch gekennzeichnet, dass** die Schichten aus Papier oder Karton über 90% Primärfasern aus Zellulose enthalten.

12. Verfahren zur Herstellung eines Verpackungsmaterials (1) gemäss einem der Ansprüche 1 bis 11, **gekennzeichnet durch** folgende Schritte:
• Herstellen eines Mehrschichtverbundes (5) **durch**:
- Zuführen zweier Bahnen aus Papier oder Karton (2a, 2b);
- Zuführen einer Schicht (4) aus flüssigem Kunststoff, insbesondere Polyethylen (PE), zwischen die beiden Bahnen aus Papier oder Karton (2a, 2b) mittels eines Extrusionsverfahrens;
- Kaschieren der extrudierten Schicht (4) aus Kunststoff mit den beiden Bahnen aus Papier oder Karton (2a, 2b).

13. Verfahren nach Anspruch 12, **gekennzeichnet durch** folgende Schritte:
- Bereitstellen einer weiteren Schichtformation, insbesondere eines weiteren Mehrschichtverbundes (3), enthaltend wenigstens eine Schicht, insbesondere aus Kunststoff;
- Kaschieren dieser weiteren Schichtformation, insbesondere dieses weiteren Mehrschichtverbundes (3) mit dem Mehrschichtverbund (5), enthaltend zwei Schichten (2a, 2b) aus Papier oder Karton.

14. Verwendung des Verpackungsmaterials (1) gemäss einem der Ansprüche 1 bis 11 zur Herstellung von tiefgezogenen Verpackungsbehälter (10).

15. Tiefgezogener Verpackungsbehälter (10) aus einem Verpackungsmaterial (1) nach einem der Ansprüche 1 bis 11.

## Claims

1. A multi-layered packaging material (1) able to be deep-drawn,
**characterised in that**
the packaging material (1) comprises a layer composite (5) having two layers (2a, 2b) of paper or cardboard and a layer (4) of plastic, in particular of polyethylene (PE) or polypropylene (PP) which lies therebetween.

2. A packaging material according to claim 1, **characterised in that** the layers (2a, 2b) of paper or cardboard have a surface weight of 50 to 250 g/m², in particular of 80 to 200 g/m².

3. A packaging material according to claim 1 or 2, **characterised in that** the intermediate layer (4) of plastic lying between the two layers (2a, 2b) of paper or cardboard has a thickness of 10 to 30 µm.

4. A packaging material according to one of the claims 1 to 3, **characterised in that** the packaging material (1) comprises a further layer formation (3), in particular a further layer composite, comprising at least one layer, in particular of plastic, which is laminated with the layer composite (5) comprising the layers (2a, 2b) of paper or cardboard.

5. A packaging material according to one of the claims 1 to 4, **characterised in that** the further layer composite (3) comprises at least one first layer (3.1) of plastic, in particular of polyethylene (PE) and a gas barrier layer (3.2), in particular of ethylene vinyl alcohol copolymer (EVOH), or consists thereof.

6. A packaging material according to claim 5, **characterised in that** the further layer composite (3) comprises at least one first and second layer (3.1, 3.3) of plastic, in particular of polyethylene (PE) and a third gas barrier layer (3.2) in particular of ethylene vinyl alcohol copolymer which lies therebetween, or consists of these.

7. A packaging material according to one of the claims 4 to 6, **characterised in that** the outer -lying first layer (3.1) of the further layer composite (3) is designed as a peel layer.

8. A packaging material according to one of the claims 4 to 7, **characterised in that** the further layer formation (3), in particular the further layer composite (3) has a total thickness of 20 µm to 60 µm.

9. A packaging material according to one of the claims 1 to 8, **characterised in that** the layer composite (5) comprising the layers of paper or cardboard (2a, 2b) has a surface weight of 150 to 400 g/m², in particular of 200 to 300 g/m².

10. A packaging material according to one of the claims 1 to 9, **characterised in that** the packaging material (1) has a total surface weight of 200 to 500 g/m², in particular of 200 to 400 g/m².

11. A packaging material according to one of the claims 1 to 10, **characterised in that** the layers of paper or cardboard comprise over 90% primary fibres of cellulose.

12. A method for manufacturing a packaging material (1) according to one of the claims 1 to 11, **characterised by** the following steps:
• creating a multi-layer composite (5) by:
- feeding two webs of paper or cardboard (2a, 2b);
- feeding a layer (4) of fluid plastic, in particular polyethylene (PE), between the two webs of paper or cardboard (2a, 2b) by way of an extrusion method;
- laminating the extruded layer (4) of plastic with the two webs of paper or cardboard (2a, 2b).

13. A method according to claim 12, **characterised in that** by the following steps:
- providing a further layer formation, in particular a further multi-layer composite (3) comprising at least one layer, in particular of plastic;
- laminating this further layer formation, in particular this further multi-layer composite (3) with the multi-layer composite (5) comprising two layers (2a, 2b) of paper or cardboard.

14. The use of the packaging material (1) according to one of the claims 1 to 11, for manufacturing deep-drawn packaging containers (10).

15. A deep-drawn packaging container (10) of a packaging material (1) according to one of the claims 1 to 11.

## Revendications

1. Matériau d'emballage (1) multicouche et emboutissable,
**caractérisé en ce que**
le matériau d'emballage (1) comporte un composite stratifié (5) qui contient deux couches (2a, 21b) de papier ou de carton et entre elles une couche (4) intermédiaire en matière synthétique, en particulier en polyéthylène (PE) ou en polypropylène (PP).

2. Matériau d'emballage selon la revendication 1, **caractérisé en ce que** les couches (2a, 2b) en papier ou en carton présentent un poids par unité de surface de 50 à 250 g/m² et en particulier de 80 à 200 g/m².

3. Matériau d'emballage selon les revendications 1 ou 2, **caractérisé en ce que** la couche intermédiaire (4) en matière synthétique située entre les deux couches (2a, 2b) en papier ou en carton présente une épaisseur de 10 à 30 µm.

4. Matériau d'emballage selon l'une des revendications 1 à 3, **caractérisé en ce que** le matériau d'emballage (1) contient une autre formation stratifiée (3), en particulier un autre composite stratifié qui contient au moins une couche en particulier en matière synthétique et contrecollée sur le composite stratifié (5) qui contient les couches (2a, 2b) en papier ou en carton.

5. Matériau d'emballage selon l'une des revendications 1 à 4, **caractérisé en ce que** l'autre composite stratifié (3) comporte au moins une première couche (3.1) en matière synthétique, en particulier en polyéthylène (PE), et une couche (3.2) de barrière au gaz, en particulier en copolymère d'éthylène et d'alcool vinylique (EVOH), ou en est constituée.

6. Matériau d'emballage selon la revendication 5, **caractérisé en ce que** l'autre composite stratifié (3) comporte au moins une première et une deuxième couche (3.1, 3.3) en matière synthétique, en particulier en polyéthylène (PE), et une troisième couche (3.2) de barrière au gaz située entre elles, en particulier en copolymère d'éthylène et d'alcool vinylique (EVOH), ou en est constituée.

7. Matériau d'emballage selon l'une des revendications 4 à 6, **caractérisé en ce que** la première couche (3.1) située à l'extérieur dé l'autre composite stratifié (3) est configurée comme couche de pelage.

8. Matériau d'emballage selon l'une des revendications 4 à 7, **caractérisé en ce que** l'autre formation stratifiée (3) et en particulier l'autre composite stratifié (3) présente une épaisseur totale de 20 µm à 60 µm.

9. Matériau d'emballage selon l'une des revendications 1 à 8, **caractérisé en ce que** le composite stratifié (5) contenant les couches en papier ou en carton (2a, 2b) présente un poids par unité de surface de 150 à 400 g/m² et en particulier de 200 à 300 g/m².

10. Matériau d'emballage selon l'une des revendications 1 à 9, **caractérisé en ce que** le matériau d'emballage (1) présente un poids total par unité de surface de 200 à 500 g/m² et en particulier de 200 à 400 g/m².

11. Matériau d'emballage selon l'une des revendications 1 à 10, **caractérisé en ce que** les couches de papier ou de carton contiennent au-delà de 90 % de fibres primaires en cellulose.

12. Procédé de fabrication d'un matériau d'emballage (1) selon l'une des revendications 1 à 11, **caractérisé par** les étapes suivantes :
- formation d'un composite multicouche (5) par
- amenée de deux bandes de papier ou de carton (2a, 2b),
- amenée d'une couche (4) en matière synthétique liquide, en particulier en polyéthylène (PE) entre les deux nappes de papier ou de carton (2a, 2b) au moyen d'une opération d'extrusion et
- contrecollage de la couche extrudée (4) en matière synthétique sur les deux nappes de papier ou de carton (2a, 2b).

13. Procédé selon la revendication 12, **caractérisé par** les étapes suivantes :
préparation d'une autre formation stratifiée, en particulier d'un autre composite multicouche (3), contenant au moins une couche en particulier en matière synthétique et
contrecollage de cette autre formation stratifiée, en particulier de cet autre composite multicouche (3) sur le composite multicouche (5) contenant deux couches (2a, 2b) en papier ou en carton.

14. Utilisation de matériau d'emballage (1) selon l'une des revendications 1 à 11 pour fabriquer des récipients d'emballage (10) emboutis.

15. Récipient d'emballage (10) embouti constitué d'un matériau d'emballage (1) selon l'une des revendications 1 à 11.
